# EUROPÄISCHE PATENTANMELDUNG

(11) **EP 4 015 109 A1**
(43) Veröffentlichungstag der Anmeldung: **22.06.2022**
(21) Anmeldenummer: 20020628.2
(22) Anmeldetag: 17.12.2020
(51) Int. Cl.: B22F 9/08

(54) **VERFAHREN UND VORRICHTUNG ZUM HERSTELLEN VON SAUERSTOFFARMEM METALLPULVER**

(71) Anmelder: Linde GmbH, 82049 Pullach (DE)
(72) Erfinder: Gerd, Waning, 32107 Bad Salzuflen (DE)
(74) Vertreter: Gellner, Bernd

(57) **Zusammenfassung**

Erfindungsgemäß ist ein Verfahren zum Herstellen von sauerstoffarmem Metallpulver vorgesehen. Dieses umfasst die folgenden Schritte:
- Bereitstellen einer Schmelze eines Metalls oder einer Metall-Legierung,
- Ausbilden eines Schmelzestrahls (16) aus der Schmelze,
- Verdüsen des Schmelzestrahls (16) mittels eines Verdüsungsfluids (17), und
- Ausbilden von Metallpulverpartikeln aus dem Schmelzestrahl (16).

Das Verfahren zeichnet sich dadurch aus, dass dem Verdüsungsfluid (17) und/oder einem Spülgas und/oder der Schmelze vor dem Verdüsen und/oder während des Verdüsens ein Reagens oder Reaktivstoff zur Reduzierung des Sauerstoffgehalts zugesetzt wird.

Ferner ist erfindungsgemäß eine Vorrichtung (1) zum Herstellen von sauerstoffarmem Metallpulver vorgesehen, welche eine Einrichtung zum Bereitstellen einer Schmelze eines Metalls oder einer Metall-Legierung, eine Düseneinrichtung (4) zum Verdüsen der Schmelze mittels eines Verdüsungsfluids (17), und eine Verdüsungskammer (14) zum Ausbilden von Metallpulverpartikeln aus der verdüsten Schmelze mittels eines Verdüsungsfluids (17) umfasst. Die Vorrichtung (1) zeichnet sich dadurch aus, dass eine Reaktivstoffzuführeinrichtung (11) vorgesehen ist, die ausgebildet ist, um der verdüsten Schmelze und/oder dem Verdüsungsfluid (17) oder einem Spülgas ein Reagens oder Reaktivstoff zur Reduzierung des Sauerstoffgehalts zuzusetzen.

## Beschreibung

Die vorliegende Erfindung betrifft ein Verfahren und eine Vorrichtung zum Herstellen von sauerstoffarmem Metallpulver.

Es gibt zahlreiche Verfahren, um Metallpulver herzustellen. Dazu gehören das mechanische Zerkleinern von festem Metall, das Ausscheiden aus Salzlösungen, die thermische Zersetzung einer chemischen Verbindung, die Reduktion einer chemischen Verbindung, meist des Oxides in fester Phase, das elektrolytische Abscheiden und die Verdüsung von flüssigem Metall. Die drei letztgenannten Verfahren werden in der Praxis am häufigsten zur Herstellung von Metallpulver verwendet.

Bei der Verdüsung wird geschmolzenes Metall in kleine Tröpfchen zerteilt und rasch erstarrt, bevor die Schmelzetröpfchen in Kontakt miteinander oder mit einer festen Oberfläche kommen. Das Prinzip dieses Verfahrens beruht auf der Zerteilung eines dünnen, flüssigen Metallstrahls durch einen mit hoher Geschwindigkeit auftreffenden Gas- oder Flüssigkeitsstrom. Luft, Stickstoff und Argon sind die meistgenutzten Gase, als Flüssigkeit wird vor allem Wasser eingesetzt.

Auch andere Verfahren zur Schmelzezerteilung finden zunehmend Anwendung, wie z.B. die Zentrifugalverdüsung, bei der Schmelzetröpfchen von einer rotierenden Quelle weggeschleudert werden.

Während die Wasserverdüsung insbesondere für die Herstellung von Pulvern aus Eisen, Stahl, Kupfer und Kupferlegierungen eingesetzt wird, erfolgt die Verdüsung von Aluminium und Zink überwiegend, die von Kupfer teilweise unter Luft.

Für die Druckluftverdüsung wird zunächst eine Schmelze des zu verdüsenden Metalls oder der zu verdüsenden Legierung aufgebaut und entsprechend überhitzt. Diese überhitzte Schmelze läuft beispielsweise über einen zweiten kleineren Tiegel oder einen Eingießtrichter und bildet dort einen Schmelzestrahl aus, der senkrecht durch eine Düsenkonstruktion fällt. Der Schmelzestrahl wird durch ein Gas (Trägergas), insbesondere Druckluft, zerstäubt und die entstehenden Tröpfchen erstarren in einer Verdüsungskammer in der Bewegung. In der Verdüsungskammer und/oder in nachgeschalteten Gasreinigungsanlagen (Zyklone, Filter) wird das Metallpulver vom Trägergas getrennt.

Bei der industriellen Stahlpulvergewinnung durch Wasserverdüsung werden bevorzugt niedriggekohlte, im LD-Verfahren hergestellte, Stahlschmelzen verwendet. Eine weitere Möglichkeit zur Stahlpulvergewinnung besteht darin, sortierten Schrott zu verwenden und diesen in einem Lichtbogenofen zu schmelzen.

Viele durch die oben beschriebenen Verfahrenstechnologien erzeugte Metallpulver weisen häufig unerwünscht hohe Sauerstoffgehalte auf. Bei der Verdüsung durch Luft oder Wasser kann sogar zusätzlich Sauerstoff eingebracht werden. Unerwünscht sind diese Gehalte an Sauerstoff, da sie in nachgeschalteten Prozessen, wie z.B. dem 3D-Druck mittels z.B. LSM oder Binder-Jetting, zu oxidischen Einschlüssen oder Poren führen. Es ist daher wünschenswert, wenn die Metallpulver einen niedrigen Sauerstoffgehalt aufweisen.

Es ist bekannt, hochreine Pulver aus Sonderstahl, Superlegierungen und anderen hochlegierten bzw. oxidationsempfindlichen Werkstoffen beispielsweise durch Verdüsung mit Inertgas herzustellen. Dieses Verfahren liefert meist kugelförmige Pulver, die für das konventionelle mechanische Pressen von Formteilen kaum, für eine Verarbeitung durch isostatisches Pressen und Pulverspritzgießen aber gut geeignet sind.

Großtechnisch wird häufig das ASEA-STORA-Verfahren zur Verdüsung von Schnellarbeitsstahlschmelzen angewendet. Durch Verwendung von gereinigtem Inertgas, wie z.B. N2 und Ar, und Arbeiten in einer geschlossenen Anlage lassen sich Pulver mit in etwa 100 ppm Sauerstoff erzeugen. Zur Erhöhung der Abkühlgeschwindigkeit der Metalltröpfchen wird die Verdüsungskammer von außen gekühlt und es wird für das Sammeln der Pulver ein wassergekühlter Boden verwendet.

Ein anderes Verfahren umfasst die Verdüsung mit Gasen in einer Laval-Düse nach NANOVAL. Für die Erzeugung reiner kugeliger Metallpulver aus reaktiven Metallen wie Titan oder Zirkonium sind Verfahren vorteilhaft, die den Kontakt des schmelzflüssigen Metalls mit keramischem Tiegelmaterial nicht zulassen, da dies zu einer Oxidation der Schmelze und möglicherweise zur Zerstörung des Tiegels führen könnte. Daher erschmilzt man das reaktive Metall induktiv oder mittels Plasma in einem gekühlten Kupfertiegel. Zwischen Kupfertiegel und Schmelze bildet sich eine dünne erstarrte Schicht des zu verdüsenden Metalls, welche eine Reaktion der Schmelze mit dem Tiegelmaterial wirkungsvoll verhindert.

Eine andere Möglichkeit der keramikfreien Metallverdüsung, die sich besonders für reaktive Werkstoffe eignet und z. B. in der Herstellung von Titanpulver Verwendung findet, stellt das EIGA-Verfahren dar. Bei diesem Verfahren wird das zu verdüsende Metall bzw. die zu verdüsende Legierung als Elektrode in Stangenform senkrecht einer ringförmigen Induktionsspule zugeführt und hier oberflächlich aufgeschmolzen. Um ein gleichförmiges Anschmelzen zu gewährleisten, unterliegt die Stange während des Verfahrens einer Drehbewegung. Die so erzeugte Schmelze tropft schließlich im freien Fall durch eine Ringdüse, wird hier zerstäubt und erstarrt. Anschließend wird das Pulver in einen Verdüsungsbehälter abgeschieden.

Ebenfalls für die Herstellung reiner sphärischer Titan- und Titanlegierungspulver wird auch die Plasma-Verdüsung verwendet. Ein aus der zu verdüsenden Legierung gefertigter Draht von ca. 3 mm Durchmesser wird einer Anordnung von drei Plasmabrennern zugeführt, wo er in einem Schritt geschmolzen und zerstäubt wird. Durch die Reinheit des Ausgangsmaterials, das Fehlen jeglichen Tiegelmaterials und das Schmelzen unter inerter Atmosphäre erhält man ein Endprodukt höchster Reinheit.

Eine Zerteilung von Schmelzen unter Vakuum, die man vom Prinzip her auch der Verdüsung zuordnen muss, ist mit Hilfe von Edelgasen oder Wasserstoff möglich. Die unter Druck mit dem Gas angereicherte Schmelze wird in dünnem Strahl in eine evakuierte Kammer gedrückt. Die Expansion des in der Schmelze gelösten Gases zerteilt diese in feine Tröpfchen.

Häufig werden Metallpulver nach der Herstellung einer Glühbehandlung unterworfen. Eine Reduktion der Pulver ist z.B. notwendig, wenn in Folge längerer oder ungünstiger Lagerung (erhöhte Feuchtigkeit und Temperatur) die Pulverteilchen mehr oder weniger oberflächlich oxidiert sind. Die Reduktion wird in herkömmlichen, auch für das Sintern genutzten Öfen vorgenommen. Am häufigsten werden als Reduktionsatmosphäre reiner Wasserstoff und Ammoniakspaltgas verwendet.

Die genannten Verfahren, um Pulver mit niedrigen Sauerstoffgehalten zu erzeugen, sind mit zum Teil erheblichem technischen Aufwand und daher mit hohen Kosten verbunden.

Daher besteht eine Aufgabe der Erfindung darin, ein Verfahren und eine Vorrichtung anzugeben, welche es ermöglichen, den Sauerstoffgehalt eines durch Verdüsung hergestellten Metallpulvers auf eine einfachere und wirtschaftlichere Weise zu reduzieren.

Die Aufgabe wird durch die Merkmale der unabhängigen Ansprüche gelöst. Vorteilhafte Ausgestaltungen oder Weiterbildungen sind in den Unteransprüchen angegeben.

Erfindungsgemäß ist ein Verfahren zum Herstellen von Metallpulver vorgesehen. Dieses umfasst die folgenden Schritte:
- Bereitstellen einer Schmelze eines Metalls oder einer Metall-Legierung,
- Ausbilden eines Schmelzestrahls aus der Schmelze,
- Verdüsen des Schmelzestrahls mittels eines Verdüsungsfluids, und
- Ausbilden von Metallpulverpartikeln aus dem Schmelzestrahl.
   Das Verfahren zeichnet sich erfindungsgemäß dadurch aus, dass dem Verdüsungsfluid und/oder einem Spülgas und/oder der Schmelze vor dem Verdüsen und/oder während des Verdüsens ein Reagens oder Reaktivstoff zur Reduzierung des Sauerstoffgehalts zugesetzt wird.

Unter einem Metallpulver wird im Sinne der Erfindung ein feines Pulver eines Metalls oder einer Metall-Legierung verstanden. Die Feinheit des Pulvers richtet sich grundsätzlich nach dem erstrebten Verwendungszweck, etwa in der Pulvermetallurgie, in additiven Herstellungsverfahren (Lasersintern, 3D-Druck, Rapid Prototyping oder dergleichen) oder zur Drehmomentübertragung in Magnetpulverkupplungen oder Magnetpulverbremsen. Unter einem Schmelzestrahl wird jede Art eines gerichteten Stroms aus geschmolzenem Material im Wesentlichen ohne feste äußere Führung verstanden. Unter einer Verdüsung wird jede Art einer Zerstäubung durch ein Fluid verstanden, das hier als Verdüsungsfluid bezeichnet wird. Das Ausbilden der Metallpulverpartikel kann beispielsweise durch geeignete Maßnahmen der Abkühlung ebenfalls im freien Fall oder Flug erfolgen. Ein Reagens oder Reaktivstoff zur Reduzierung des Sauerstoffgehalts kann jeglicher Stoff sein, der mit dem Verdüsungsgas oder einem Spülgas und/oder mit der Schmelze reagieren kann, um Sauerstoff zu binden. Dadurch kann der Sauerstoffgehalt des Metallpulvers wirksam reduziert und dessen Reinheit gesteigert oder sichergestellt werden.

Da häufig nicht bekannt ist, welchen Quellen der Sauerstoff-Anteil in den Pulvern entstammt, zielt die Erfindung darauf ab, etwaigen freien Sauerstoff chemisch abzubinden. Dies kann geschehen, bevor der Verdüsungsprozess startet oder während der Verdüsungsprozess läuft. Das Reagens kann ein Gas oder sonstiges Fluid oder ein Feststoff (etwa in Form eines Staubs oder Schwebstoffs), sein oder aufweisen. Das Reagens kann gegebenenfalls auch an den Metallpartikeln angelagert werden, um auch nach Erstarrung zu dem Metallpulver Sauerstoff an sich zu binden, wobei das eingelagerte Reagens oder gegebenenfalls entstehende Oxid bei einer Bindungsreaktion mit Sauerstoff oder bei einer weiteren Verarbeitung des Metallpulvers entweichen kann. Das Reagens oder der Reaktivstoff kann einen stark reduzierenden Kohlenwasserstoff wie Acetylen, Ethen, Propan, Erdgas oder dergleichen aufweisen. Diese können dem Spülgas beigemischt werden, bevor der Verdüsungsprozess startet, oder dem Verdüsungsgas während der Verdüsung selbst. Aufgrund ihrer hohen Reaktivität können Acetylen oder Ethen vorteilhaft zu diesem Zweck eingesetzt zu werden, sind einfach zu beschaffen und mit begrenztem Mehraufwand verbunden.

Das Reagens kann dem Verdüsungsfluid oder einem Spülgas vor oder während der Verdüsung beigemischt werden.

Eine Zudosierung des Reagens, insbesondere Kohlenwasserstoffes, kann vorzugsweise so gesteuert werden, dass sowohl eine Aufkohlung des Materials als auch eine Oxidbildung verhindert werden. Die Steuerung kann von formelmäßig oder diagrammatisch darstellbaren, analytisch oder simulativ oder experimentell ermittelten Zusammenhängen Gebrauch machen, die einen Oxidationsprozess der Schmelzebestandteile unter Berücksichtigung von Parametern einer Atmosphäre, in welcher die Reaktion stattfindet, beschreiben. Die Parameter können insbesondere Temperatur und eine charakteristische thermodynamische Größe wie etwa die freie Reaktionsenthalpie und wenigstens einen aus CO/CO₂-Verhältnis, H₂/H₂O-Verhältnis und Sauerstoffpartialdruck ausgewählten Parameter beinhalten. Die Steuerung kann beispielsweise von einem in einem Ellingham-Richardson-Diagramm oder Ellingham-Diagramm dargestellten Reaktionsverlauf Gebrauch machen, um in Abhängigkeit von einer gemessenen oder angenommenen Prozesstemperatur und einem ausgewählten Schmelzebestandteil einen Zielwert für das CO/CO₂-Verhältnis und/oder das H₂/H₂O-Verhältnis und/oder den Sauerstoffpartialdruck zu ermitteln. Der Zielwert kann vorzugsweise für eine um eine vorgegebene Temperaturdifferenz unter dem Schmelzpunkt eines ausgewälten Schmelzebestandteils liegenden Temperatur ermittelt werden. Bei dem Zerfall der Gase sich bildende C-Partikel oder Radikale könnten zudem als Kristallisationskeime dienen und somit zu einem höheren Ausbringungsgrad feinerer Pulver beitragen. Sofern im Rahmen des Prozesses Wasserstoffgas entsteht, sind die entstehenden Mengen für die meisten Metalle unkritisch bzw. können, sofern sie durch diese absorbiert würden, aufgrund der hohen Diffusibilität schnell wieder entweichen.

Der ausgewählte Schmelzebestandteil ist bei einem reinen Metall das Metall der Schmelze. Wenn die Schmelze eine Legierung aufweist, kann insbesondere der oxidationsempfindlichste Legierungsbestandteil der ausgewählte Schmelzebestandteil sein. Dabei kann von der Annahme Gebrauch gemacht werden, dass insbesondere oxidationsempfindliche Legierungsbestandteile wie Cr oder Mn vorrangig den Sauerstoff abbinden. Hierzu kann wie beschrieben auf das Ellingham-Richardson-Diagramm zurückgegriffen werden.

Die Zudosierung kann vorteilhaft unter Messung des Sauerstoffpartialdrucks während der Verdüsung reguliert werden.

Weiterhin ist erfindungsgemäß eine Vorrichtung zum Herstellen von Metallpulver vorgesehen. Diese umfasst:
- eine Einrichtung zum Bereitstellen einer Schmelze eines Metalls oder einer Metall-Legierung,
- eine Düseneinrichtung zum Verdüsen der Schmelze mittels eines Verdüsungsfluids, und
- eine Verdüsungskammer zum Ausbilden von Metallpulverpartikeln aus der verdüsten Schmelze mittels eines Verdüsungsfluids.
   Die Vorrichtung zeichnet sich erfindungsgemäß dadurch aus, dass eine Reaktivstoffzuführeinrichtung vorgesehen ist, die ausgebildet ist, um der verdüsten Schmelze und/oder dem Verdüsungsfluid oder einem Spülgas ein Reagens oder Reaktivstoff zur Reduzierung des Sauerstoffgehalts zuzusetzen.

Die Vorteile der erfindungsgemäßen Vorrichtung entsprechen im Wesentlichen den Vorteilen des erfindungsgemäßen Verfahrens. Eine Einrichtung zum Bereitstellen einer Schmelze kann beispielsweise einen insbesondere kippbaren Schmelzetiegel oder einen Abstichkanal aufweisen.

Das Reagens oder der Reaktivstoff kann einen stark reduzierenden Kohlenwasserstoff wie Acetylen, Ethen, Propan, Erdgas oder dergleichen aufweisen.

Weiterhin kann die Reaktivstoffzuführeinrichtung eine Mischkammer zum Beimischen des Reagens oder Reaktivstoffs zum Verdüsungsfluid umfassen. Dabei kann aus der Mischkammer der Düseneinrichtung zumindest bereichsweise ein Reaktivstoff oder ein Verdüsungsfluid oder eine Mischung aus Verdüsungsfluid und Reaktivstoff zuführbar sein. Demgemäß kann die Mischkammer einen ersten Einlass zum Zuführen eines Verdüsungsfluids und einen zweiten Einlass zum Zuführen eines Reagens oder Reaktivstoffs oder einen zweiten Einlass zum Zuführen eines ein Reagens oder einen Reaktivstoff enthaltenden Verdüsungsfluids sowie einen Auslass, der mit einer Düseneinrichtung verbunden ist, aufweisen. Die Mischkammer kann beispielsweise in einer Verdüsungsfluidkammer, welche in einem Gehäusekörper der Düseneinheit stromaufwärts einer Verdüsungsdüse zur Bereitstellung einer ausreichenden Menge Verdüsungsfluid vorgesehen sein kann, integriert sein. Die Mischkammer kann auch extern in Form einer Anschlusseinheit vorgesehen sein, die an einem Gehäusekörper der Düseneinheit angeordnet oder anordenbar sein kann. Eine solche externe Mischkammer ist vorteilhaft, da sich bestehend Anlagen bzw. Vorrichtungen damit derart erweitern lassen, dass eine Zumischung des Reagens oder Reaktivstoffs möglich ist. Die Mischkammer kann alternativ oder zusätzlich auch zum Beimischen des Reagens oder Reaktivstoffs zu einem Spülgas ausgebildet sein.

Die Reaktivstoffzuführeinrichtung kann auch zumindest eine Düse umfassen, um das Reagens oder den Reaktivstoff oder ein das Reagens oder den Reaktivstoff enthaltendes Gemisch in die Verdüsungskammer einzubringen.

Die Düseneinrichtung kann auch selbst zwei Einlässe aufweisen, wobei ein Einlass zum Zuführen von insbesondere gasförmigem Verdüsungsfluid und der andere Einlass zum Zuführen des Reagens oder Reaktivstoffs oder eines das Reagens oder den Reaktivstoff enthaltenden Gases (Premix) aus entsprechenden Vorratsbehältern vorgesehen sein kann.

Die Zugabe des Reagens oder Reaktivstoffs kann von einer Steuereinrichtung gesteuert werden. Diese Steuereinrichtung kann eine Reaktivstoffregeleinrichtung mit einem geschlossenen Regelkreis umfassen, die die Zugabe regelt. Die Reaktivstoffregeleinrichtung kann ausgebildet sein, mittels eines Sensors einen Ist-Wert eines oder mehrerer Volumenströme in der Verdüsungskammer und/oder einer Verdüsungsdüse und/oder der Mischkammer und/oder einer Verdüsungsfluidkammer zu erfassen, diesen mit einem vorgegebenen Sollwert eines oder mehrerer Volumenströme zu vergleichen und über ein Stellglied dann den vorgegebenen Sollwert einzustellen. Unter Volumenstrom bzw. -strömen werden die Werte der entsprechenden Fluidströme verstanden, die von der Reaktivstoffzuführeinrichtung der Verdüsungskammer und/oder der Verdüsungseinrichtung zugeführt werden.

Die Reaktivstoffregeleinrichtung kann ausgebildet sein, eine Zudosierung des Reagens, insbesondere eines Kohlenwasserstoffes, unter Rückgriff auf formelmäßig oder diagrammatisch darstellbare, analytisch oder simulativ oder experimentell ermittelte Zusammenhänge, die einen Oxidationsprozess der Schmelzebestandteile unter Berücksichtigung von Parametern einer Atmosphäre, in welcher die Reaktion stattfindet, beispielsweise in Form eines Ellingham-Richardson-Diagramm oder Ellingham-Diagramm beschreiben, so zu steuern, dass sowohl eine Aufkohlung des Materials als auch eine Oxidbildung verhindert werden.

Es kann ferner eine O₂-Sonde oder Lambda-Sonde vorgesehen sein, die ausgebildet und angeordnet ist, um einen Ist-Wert für den Sauerstoffpartialdruck bzw. Sauerstoffgehalt während der Verdüsung zu messen, und die Reaktivstoffregeleinrichtung kann ausgebildet sein, den Sollwert des einen Volumenstroms oder der mehreren Volumenströme anhand eines Vergleichs des IstWerts des Sauerstoffpartialdrucks bzw. -gehalts mit einem vorgegebenen Zielwert festzulegen. Dabei kann der Einsatz eine Lambda-Sonde bevorzugt sein, da diese fremdbeheizt sein kann. Eine O₂-Sonde wird typischerweise durch den Prozess selbst beheizt, was aber in der vergleichsweise kühlen Atmosphäre der Verdüsungskammer schwierig sein kann.

Für die Zudosierung kann beispielsweise ein statischer Mischers vorgesehen sein.

Die Erfindung wird im Folgenden anhand der Figuren näher erläutert. Diese zeigen in
- Figur 1: eine schematische, seitlich geschnittene Darstellung einer erfindungsgemäßen Vorrichtung zum Herstellen von Metallpulver,
- Figur 2: eine schematische, seitlich geschnittene Darstellung einer Düseneinrichtung der Vorrichtung aus Figur 1;
- Figur 3: eine schematische, seitlich geschnittene Darstellung einer anderen Düseneinrichtung der Vorrichtung aus Figur 1;
- Figur 4: eine schematische, seitlich geschnittene Darstellung einer noch anderen Düseneinrichtung der Vorrichtung aus Figur 1;
- Figur 5: eine beispielhafte Darstellung eines Ellingham-Richardson-Diagramms;

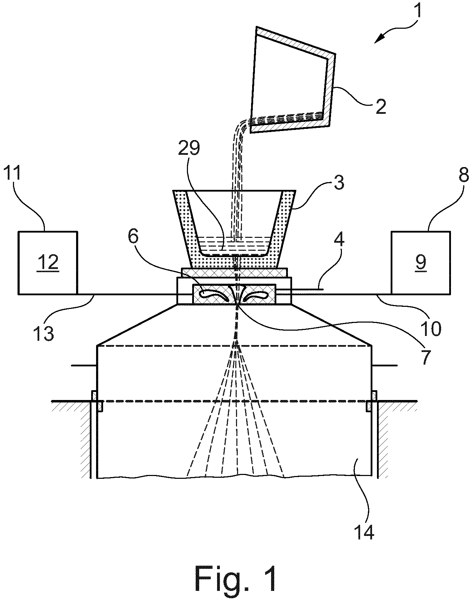

Im Folgenden wird eine erfindungsgemäße Vorrichtung zum Herstellen von Metallpulver anhand einer Vorrichtung 1 zur Herstellung von Metallpulver durch Verdüsen beschrieben (Figur 1).

Diese Vorrichtung 1 umfasst einen Schmelzetiegel 2 zum Bereitstellen einer Metallschmelze, die durch an sich bekannte Verfahren in vorangehenden Prozess-Schritten hergestellt sein kann.

Weiterhin umfasst die Vorrichtung 1 einen Eingießtrichter 3, der mittels des Schmelzetiegels 2 mit Schmelze befüllbar ist. Der Eingießtrichter 3 kann mit einer keramischen Beschichtung versehen sein. Ein Auslasskanal 29 des Eingießtrichters 3 mündet in eine Düseneinrichtung 4.

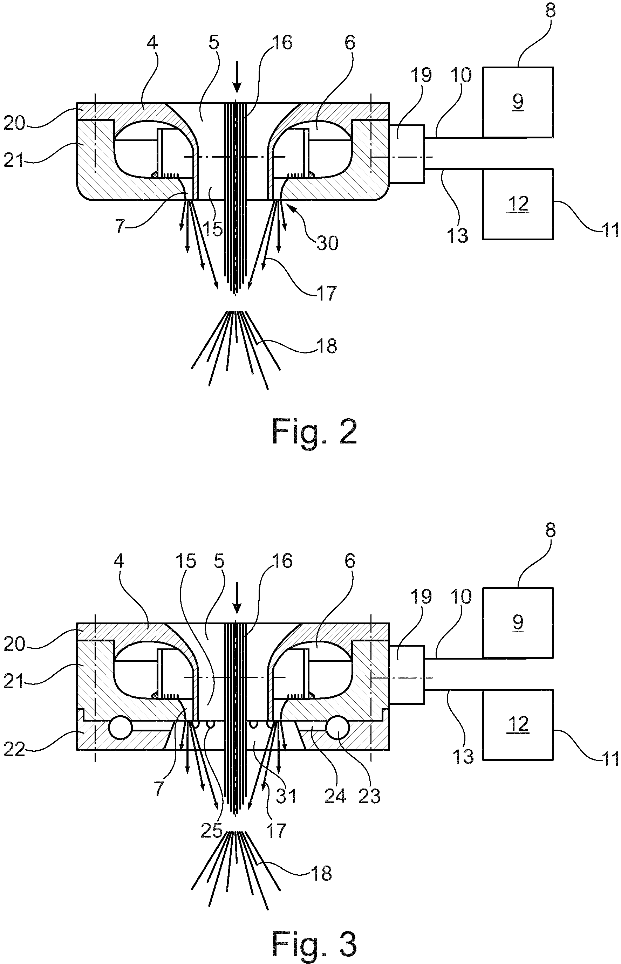

Die Düseneinrichtung 4 kann eine vorzugsweise in etwa zentral ausgebildete Durchgangsöffnung 5 (Figur 2) umfassen, über die ein vom Auslasskanal 29 des Eingießtrichters 3 ausgebildeter Schmelzestrahl 16 hindurchtreten kann. Optional (nicht näher dargestellt) kann eine Spülgaszuführung zum Zuführen eines Spülgases vorgesehen sein, welches den Schmelzestrahl 16 in der Durchgangsöffnung umspült.

Die Durchgangsöffnung 5 kann von einer vorzugsweise kreisringförmigen Verdüsungsfluidkammer 6 zum Aufnehmen und Verteilen eines Verdüsungsfluids umgeben sein. Die Verdüsungsfluidkammer 6 kann in einen vorzugsweise konzentrisch zur Durchgangsöffnung 5 angeordneten Ringspalt 7 münden. Der Ringspalt 7 bildet eine Verdüsungsdüse 30 zum Erzeugen von Schmelzetröpfchen 18 aus dem Schmelzestrahl 16 aus.

Die Düseneinrichtung 4 kann durch eine erste (hier: obere) Schale 20 und eine zweite (hier: untere) Schale 21 gebildet sein, die mit Kavitäten versehen sind, welche einzeln oder in Kombination miteinander die Durchgangsöffnung 5, die Verdüsungsfluidkammer 6 und den Ringspalt 7 begrenzen. Die erste Schale 20 und die untere Schale 21 können zusammen einen Gehäusekörper der Düseneinrichtung 4 bilden. Dieser Aufbau und seine in der Figur gezeigte Ausgestaltung ist fertigungstechnisch vorteilhaft, ist jedoch rein beispielhaft und kann je nach Anforderungen und technischen Möglichkeiten abgewandelt werden. Beispielsweise kann die Düseneinrichtung 4 durch additive Verfahren monolithisch hergestellt werden.

Zudem ist eine Verdüsungsfluidzuführeinrichtung 8 vorgesehen, mittels der die Verdüsungsfluidkammer 6 über einen nicht näher dargestellten Kanal, der in der Düseneinrichtung 4, insbesonder der zweiten Schale 21, beispielsweise in Form einer Bohrung ausgebildet sein kann, mit einem Verdüsungsfluid beaufschlagbar ist. Die Verdüsungsfluidzuführeinrichtung 8 kann einen Verdüsungsfluidvorratsbehälter 9 für das Verdüsungsfluid aufweisen, wobei der Verdüsungsfluidvorratsbehälter 9 über einen Leitungsabschnitt 10 mit der Verdüsungsfluidkammer 6 bzw. dem oben beschriebenen Kanal verbunden sein kann.

Weiterhin ist eine Reaktivstoffzuführeinrichtung 11 vorgesehen. Die Reaktivstoffzuführeinrichtung 11 kann einen Reaktivstoffvorratsbehälter 12 aufweisen. Im Reaktivstoffvorratsbehälter 12 kann ein Reaktivstoff, beispielsweise ein Reaktionsgas, bevorratet sein. Der Reaktivstoffvorratsbehälter 12 kann über einen Leitungsabschnitt 13 und einen weiteren nicht näher dargestellten Kanal, der in der Düseneinrichtung 4, insbesonder der zweiten Schale 21, beispielsweise in Form einer Bohrung ausgebildet sein kann, mit der Verdüsungsfluidkammer 6 verbunden sein. Die Verdüsungsfluidkammer 6 kann somit auch als interne Mischkammer für Verdüsungsfluid und Reaktivstoff dienen.

Optional kann eine Anschlusseinheit 19 vorgesehen sein, an denen die Leitungsabschnitte 10, 13 anschließbar sind. Die Anschlusseinheit 19 kann zur Zusammenführung der Ströme von Verdüsungsfluid und Reaktivstoff ausgebildet sein.

Alternativ kann eine externe Mischkammer (nicht dargestellt) vorgesehen sein. Eine solche Mischkammer kann einen Einlass zum Zuführen von Verdüsungsfluid aus dem Verdüsungsfluidvorratsbehälter 9 und einen Einlass zum Zuführen von Reaktivstoff aus dem Reaktivstoffvorratsbehälter 12 für die Reaktivstoff aufweisen. Die Mischkammer kann in der Anschlusseinheit 19 integriert sein, und das Mischfluid kann der Verdüsungsfluidkammer 6 über einen nicht näher dargestellten Kanal, der in der Düseneinrichtung 4, insbesonder der zweiten Schale 21, beispielsweise in Form einer Bohrung ausgebildet sein kann, zugeführt werden.

Das Verdüsungsfluid und der Reaktivstoff können auch als Premix aus einem Gasvorratsbehälter (nicht dargestellt) bereitgestellt werden, der sowohl Verdüsungsfluid als auch einen entsprechenden Anteil an Reaktivstoff enthält. Dieser den Premix enthaltende Gasvorratsbehälter bildet dann die Reaktivstoffzuführeinrichtung aus und kann mit der Verdüsungsfluidkammer 6 direkt, zusätzlich zum dem Vorratsbehälter für das Verdüsungsfluid, verbunden sein oder mit der Mischkammer verbunden sein.

Sowohl die Durchgangsöffnung 5 als auch die Verdüsungsdüse 7 der Düseneinrichtung münden in eine Verdüsungskammer 14 (Figur 1) zum Verdüsen der Schmelzetröpfchen 18 in Pulverpartikel.

Weiterhin kann eine Steuereinrichtung (nicht dargestellt) zum Steuern der Zugabe des Reaktivstoffs vorgesehen sein. Die Steuereinrichtung kann eine Reaktivstoffregeleinrichtung mit einem geschlossenen Regelkreis, die die Zugabe regelt, aufweisen. Die Reaktivstoffregeleinrichtung kann einen P-Regler, einen I-Regler, einen D-Regler und Kombinationen daraus, wie z.B. einen PID-Regler umfassen. Die Reaktivstoffregeleinrichtung kann mittels eines Sensors einen Ist-Wert der einen oder mehrere Volumenströme in der Verdüsungsfluidkammer 6 und/oder Verdüsungskammer 8 und/oder der Mischkammer erfassen, diesen mit einem vorgegebenen Sollwert eines oder mehrerer Volumenströme vergleichen, und über ein Stellglied kann dann der vorgegebenen Sollwert eingestellt werden.

Die oben beschriebene Düseneinrichtung 4 ist so ausgebildet, dass die Reaktivstoff dem Verdüsungsfluid vor der Verdüsung zugeführt wird.

In einer Variante ist die ansonsten wie oben beschrieben ausgeführte Düseneinrichtung 4 so ausgebildet, dass der Reaktivstoff dem Verdüsungsfluid während der Verdüsung zugeführt wird. Hierzu kann eine Reaktivstoffkammer 23 (Figur 3) vorgesehen sein, die gesondert von der Verdüsungsfluidkammer 6 ausgebildet und von der Reaktivstoffzuführeinrichtung 11 aus mit Reaktivstoff beschickbar ist.

Zu diesem Zweck kann die Düseneinrichtung 4 eine dritte Schale 22 aufweisen, die unterhalb der zweiten Schale 21 angesetzt ist (die zweite Schale 22 wird hier also zur mittleren Schale, während die dritte Schale 22 eine untere Schale bildet). Die zweite Schale 22 und die dritte Schale 23 können jeweilige Kavitäten aufweisen, welche die Reaktivstoffkammer 23 begrenzen. Die dritte Schale 23 kann auch einen Zumischkanal 31 begrenzen, in welchen die Ausströmöffnung 15 und die Verdüsungsdüse 30 münden. Von der Reaktivstoffkammer 23 aus können Reaktivstoffkanäle 24 radial nach innen führen, welche über Mündungsöffnungen 25 in den Zumischkanal 31 münden. Das über die Mündungsöffnungen 25 ausströmende Reaktivstoff wird durch den über das Verdüsungsgasdüse 30 ausströmende Verdüsungsgas mitgerissen und mit diesem vermischt.

Die weiteren Einzelheiten entsprechen dem zuvor beschriebenen Ausführungsbeispiel.

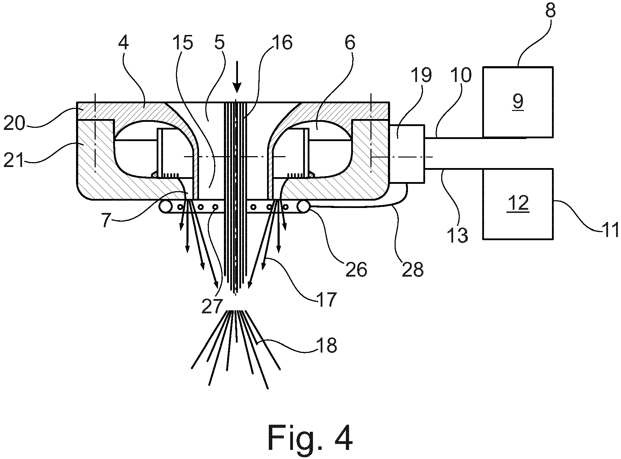

In einer weiteren Variante kann anstelle einer dritten Schale eine Ringleitung 26 (Figur 4) an der Unterseite der Düseneinrichtung 4 angesetzt sein, um sowohl die Ausströmöffnung 15 als auch die Verdüsungsdüse 30 (Ringspalt 7) im Wesentlichen konzentrisch zu umgeben. Die Ringleitung 26 kann Ausströmöffnungen 27 aufweisen, die sich nach radial innen öffnen. Die Ringleitung 26 kann über einen Leitungsabschnitt 28 mit Reaktivstoff aus der Reaktivstoffzuführeinrichtung 11 beschickbar sein.

Die weiteren Einzelheiten entsprechen dem zuvor beschriebenen Ausführungsbeispiel bzw. der zuvor beschriebenen Variante.

In einer weiteren Variante (nicht näher dargestellt) kann die Reaktivstoffzuführeinrichtung 11 bereits oberhalb, d.h. stromaufwärts der Ausströmöffung 15 münden, sodass der Reaktivstoff einem optionalen Spülgas beigemischt werden kann.

Die weiteren Einzelheiten entsprechen dem zuvor beschriebenen Ausführungsbeispiel bzw. den zuvor beschriebenen Varianten.

Es versteht sich, dass Richtungsangaben wie "oben" und "unten" sich auf die dargestellte Situation beziehen, in welcher der Schmelzestrahl von oben nach unten durch die Düseneinrichtung strömt.

Im Folgenden wird ein erfindungsgemäßes Verfahren zum Herstellen von Metallpulver beschrieben.

Im Schmelzetiegel 2 kann zunächst eine Schmelze eines zu verdüsenden Metalls oder einer zu verdüsenden Legierung aufgebaut und überhitzt werden.

Anschließend kann die überhitzte Schmelze in den Eingießtrichter 3 eingebracht werden und in dessen Auslasskanal 29 einen Schmelzestrahl 16 ausbilden, der senkrecht durch die Durchgangsöffnung 5 der Düseneinrichtung 4 hindurchtritt.

Dieser Schmelzestrahl 16 kann über die Verdüsungsdüse 7 der Düseneinrichtung 4 in der Verdüsungskammer 14 mittels des Verdüsungsmediums zerstäubt werden. Die entstehenden Tröpfchen 18 erstarren in der Verdüsungskammer 14 in der Bewegung. Je nach Variante der Düseneinrichtung 4 kann die Reaktivstoff dem Verdüsungsmedium noch vor dem Beginn der Verdüsung (Figur 2) oder dem Verdüsungsfluid und/oder der Schmelze während der Verdüsung (Figuren 3, 4) zugegeben werden.

Es ist selbstverständlich denkbar, die Versetzung des Verdüsungsfluids mit einem Reaktivstoff und die Zugabe eines Reduktionsfluids während der Verdüsung miteinander zu kombinieren. Dies kann beispielsweise sinnvoll sein, um unterschiedliche Legierungsbestandteile in unterschiedlichen Temperaturbereichen zu erreichen. Durch eine sehr nahe an der Austrittsöffnung der Verdüsungsdüse 30 (Ringspalt 7) angeordnete Zugabe des Reduktionsfluids kann noch eine zumindest teilweise Vermischung des Reduktionsfluids mit dem Verdüsungsfluid erreicht werden, bevor dieses den Schmelzestrahl 16 erreicht.

Weiterhin kann vorgesehen sein, entweder in der Verdüsungskammer 14 und/oder in nachgeschalteten Gasreinigungsanlagen (Zyklone, Filter) das Metallpulver vom Verdüsungsfluid zu trennen.

In einem nächsten Schritt lässt sich das Metallpulver mit Hilfe einer Detektionseinrichtung, wie beispielsweise einem Massenspektrometer (Gaschromatograph), beispielsweise hinsichtlich des Sauerstoffgehalts analysieren.

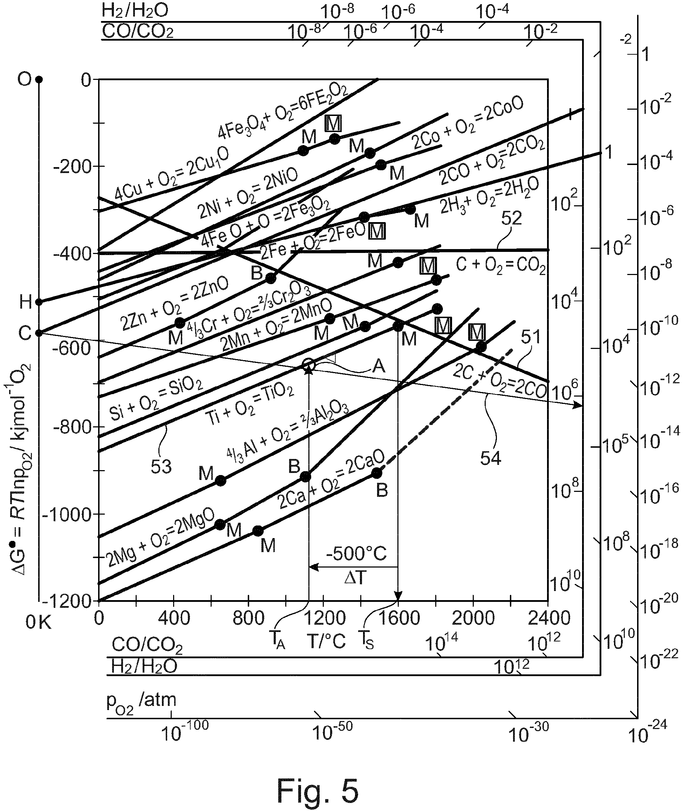

Figur 5 zeigt ein beispielhaftes Ellingham-Diagramm 50, das zur Einstellung der Atmospärengüte des Zerstäubungsgases verwendet werden kann. Ellingham-Diagramme sind eine besondere grafische Darstellungsform des Prinzips, dass die thermodynamische Umsetzbarkeit einer Reaktion vom Vorzeichen von ΔG = ΔH - TΔS abhängt, wobei ΔG die Gibbs-Funktion der Reaktion oder freie Reaktionsenthalpie, ΔH die Enthalpieänderung, T die Temperatur und ΔS die Entropieänderung ist.

Das Ellingham-Diagramm trägt als Funktion der Temperatur als Abszisse die freie Reaktionsenthalpie (ΔG) für jede Oxidationsreaktion auf der Ordinate auf. Jeder Reaktion ist eine Kennlinie in dem Diagramm zugeordnet. Oxidationsreaktionen von Metallen sind Linien zugeordnet, auf denen jeweils auch Übergänge von Aggregatzuständen angegeben sind. Hierbei steht "M" für den Schmelzpunkt, "B" für den Siedepunkt des Metalls und stehen die gleichen Buchstaben "M" und "B" in Kästchen für den Schmelzpunkt und Siedepunkt des jeweiligen Oxids.

Zur Vergleichbarkeit der unterschiedlichen Reaktionen beziehen sich alle Werte von ΔG auf die Reaktion der gleichen Sauerstoffmenge, ausgewählt beispielsweise als 1 Mol O (1/2 mol O₂) oder 1 Mol O₂ je nach Quelle. Das gezeigte Diagramm in Figur 5 bezieht sich auf 1 Mol O₂. Daher bezieht der Graph etwa für die Oxidation von Chrom ΔG auf die Reaktionsformel 4/3 Cr(s) + O₂(g) → 2/3 Cr₂O₃(s), was 2/3 der molaren Gibbs-Bildungsenergie ΔG_{f}°(Cr₂O₃, s) entspricht.

Für die Oxidation von Kohlenstoff steht eine durchgezogene fallende Linie 51 für die Bildung von CO: C(s) + 1/2 O₂(g) → CO(g) mit einer Zunahme der Molzahl des Gases, was zu einem positiven ΔS und einer negativen Steigung führt. Eine durchgezogene, in etwa horizontale Linie 52 für die Bildung von CO₂ ist ungefähr horizontal, da die Reaktion C(s) + O₂(g) → C O₂(g) die Molzahl des Gases unverändert lässt, sodass ΔS klein ist.

In den üblicherweise verwendeten Temperaturbereichen liegen das Metall und das Oxid meist in einem kondensierten Zustand (fest oder flüssig) vor, und Sauerstoff ist ein Gas mit einer viel größeren molaren Entropie. Für die Oxidation jedes Metalls ist der dominante Beitrag zur Entropieänderung (ΔS) die Entfernung von 1/2 mol O₂, so dass ΔS für alle Metalle negativ und ungefähr gleich ist. Die Steigung der Graphen ΔG/dT = -ΔS ist daher für alle Metalle positiv, wobei ΔG bei niedrigerer Temperatur immer negativer wird und die Linien für alle Metalloxide ungefähr parallel sind. Da diese Reaktionen exotherm sind, werden sie bei niedrigeren Temperaturen immer möglich. Bei einer ausreichend hohen Temperatur kann sich das Vorzeichen von ΔG umkehren (positiv werden) und das Oxid kann sich spontan zum Metall reduzieren, wie für Ag und Cu gezeigt.

Wie bei jeder Vorhersage chemischer Reaktionen, die auf rein thermodynamischen Gründen beruht, kann eine spontane Reaktion sehr langsam sein, wenn eine oder mehrere Stufen des Reaktionsweges sehr hohe Aktivierungsenergien E_{A} aufweisen. Wenn zwei Metalle vorhanden sind, müssen zwei Gleichgewichte berücksichtigt werden. Das Oxid mit dem negativeren ΔG wird gebildet und das andere Oxid wird reduziert.

Neben der Ordinate ist (auf Höhe des absoluten Nullpunkts der Temperatur) eine Linie mit sogenannten "Koppelpunkten" für C, H und O aufgetragen, und um die anderen Seiten des Diagramms ziehen sich Maßstäbe, an denen jeweils durch Ziehen einer Messlinie durch das Diagramm von dem Koppelpunkt für C aus ein Atmosphärenverhältnis CO/CO₂, von dem Koppelpunkt für H aus ein Atmosphärenverhältnis H₂/H₂O und von dem Koppelpunkt für O aus ein SauerstoffPartialdruck p_{O2} ablesbar ist.

Für die Einstellung der Atmosphäre zur Reduktion des Metalls im Schmelzestrahl 16 oder den Tröpfchen 18 in der Vorrichtung 1 anhand des Ellington-Diagramms wird davon ausgegangen, dass das Metall im Gasstrahl zu einem Pulver erstarrt und dabei grundsätzlich einer Oxidation ausgesetzt sein kann, welche durch die Zugabe der Reaktivstoff möglichst unterbunden werden soll, bis die Kinetik der Reaktion mit dem Verdüsungsfluid so langsam ist, dass keine Oxidation mehr stattfindet. Beispielsweise findet bei Chrom unterhalt von 300°C, bei Eisen unterhalb von 170°C praktisch keine Oxidation mehr statt. In der Praxis wird ein Arbeitspunkt A betrachtet, der etwa 400 bis 500°C unter dem Schmelzpunkt M liegt. Die Betrachtung findet grundsätzlich für das oxidationsempfindlichste Metall statt, sofern sein Anteil in der Schmelze bei oder oberhalb von etwa 1,5% liegt. Als Beispiel sei eine Kennlinie 53 für Chrom betrachtet. Der Schmelzpunkt M für Titan liegt gemäß dem Diagramm in Figur 5 bei etwa Ts=1600°C. Bei einer um ΔT=500°C niedrigeren Temperatur T_{A}=1100°C kann der Arbeitspunkt A auf der Kennlinie 53 ermittelt werden. Durch den Arbeitspunkt A kann von dem Koppelpunkt C aus eine Messlinie 54 gezogen werden. Wo die Messlinie 54 auf den Maßstab CO/CO₂ trifft, kann der gewünschte Wert für die Atmosphärengüte abgelesen werden, im Beispiel liegt der Zielwert bei etwas über 10⁶.

Auf ähnliche Weise kann beispielsweise ermittelt werden, dass für einen Edelstahl 1.4301 (316 I) eine Atmosphäre einzustellen wäre, bei der durch die Spaltung des Kohlenwasserstoffes und Aufnahme des Sauerstoffes (aus welcher Quelle auch immer) mit Bildung von CO und CO₂ in etwa 30000 mal mehr CO als CO₂ im Prozess vorhanden ist.

Aufgrund des aus dem Diagramm 50 ermittelten Zielwert kann nun die Zugabe des Reaktivstoffs zu dem Verdüsungsgas in der Vorrichtung 1 reguliert werden. Hierzu kann auch eine O₂-Sonde oder Lambda-Sonde verwendet werden, welche den Sauerstoffpartialdruck in der Verdüsungskammer misst. Die Zugabe des Reaktivstoffs selbst kann über einen statischen Mischer erfolgen.

Die Anwendung der Erfindung ist nicht auf die beschriebenen Ausführungsbeispiele beschränkt. Das Prinzip, einem Verdüsungsfluid eine Reaktivstoff beizumischen, kann nicht nur bei der Fallstrahlverdüsung, sondern auch beispielsweise bei der Zentrifugalverdüsung oder noch anderer Verdüsungsformen angewendet werden. Es kann auch nicht nur auf Gase, sondern auch auf Flüssigkeiten als Verdüsungsfluide angewendet werden.

### Bezugszeichenliste

- 1: Vorrichtung
- 2: Schmelzetiegel
- 3: Eingießtrichter
- 4: Düseneinrichtung
- 5: Durchgangsöffnung
- 6: Verdüsungsfluidkammer
- 7: Ringspalt
- 8: Verdüsungsfluidzuführeinrichtung
- 9: Verdüsungsfluidvorratsbehälter
- 10: Leitungsabschnitt
- 11: Reaktivstoffzuführeinrichtung
- 12: Reaktivstoffvorratsbehälter
- 13: Leitungsabschnitt
- 14: Verdüsungskammer
- 15: Auslasskanal
- 16: Schmelzestrahl
- 17: Verdüsungsfluid
- 18: Tröpfchen
- 19: Anschlusseinheit
- 20: Erste Schale
- 21: Zweite Schale
- 22: Dritte Schale
- 23: Reaktivstoffkammer
- 24: Reaktivstoffkanal
- 25: Mündungsöffnung
- 26: Ringleitung
- 27: Ausströmöffnung
- 28: Leitungsabschnitt
- 29: Auslasskanal
- 30: Verdüsungsdüse
- 31: Zumischkanal
- 50: Diagramm
- 51,52: Linien
- 53: Kennlinie
- 54: Messlinie

## Patentansprüche

1. Verfahren zum Herstellen von Metallpulver umfassend die folgenden Schritte:
- Bereitstellen einer Schmelze eines Metalls oder einer Metall-Legierung,
- Ausbilden eines Schmelzestrahls (16) aus der Schmelze,
- Verdüsen des Schmelzestrahls (16) mittels eines Verdüsungsfluids (17), und
- Ausbilden von Metallpulverpartikeln aus dem Schmelzestrahl (16),
**dadurch gekennzeichnet,**
**dass** dem Verdüsungsfluid (17) und/oder einem Spülgas und/oder der Schmelze vor dem Verdüsen und/oder während des Verdüsens ein Reagens oder Reaktivstoff zur Reduzierung des Sauerstoffgehalts zugesetzt wird.

2. Verfahren gemäß Anspruch 1,
**dadurch gekennzeichnet,**
**dass** das Reagens oder der Reaktivstoff einen stark reduzierenden Kohlenwasserstoff, insbesondere Acetylen, Ethen, Propan, Erdgas oder dergleichen aufweist.

3. Verfahren gemäß Anspruch 1 oder 2,
**dadurch gekennzeichnet,**
**dass** eine Zudosierung des Reagens oder Reaktivstoffs, insbesondere eines Kohlenwasserstoffes, so gesteuert wird, dass sowohl eine Aufkohlung des Materials als auch eine Oxidbildung verhindert wird.

4. Verfahren gemäß Anspruch 3,
**dadurch gekennzeichnet,**
**dass** die Steuerung von formelmäßig oder diagrammatisch darstellbaren, analytisch oder simulativ oder experimentell ermittelten Zusammenhängen Gebrauch macht, die einen Oxidationsprozess der Schmelzebestandteile unter Berücksichtigung von Parametern einer Atmosphäre, in welcher die Reaktion stattfindet, beschreiben, wobei die Parameter insbesondere Temperatur und eine charakteristische thermodynamische Größe wie etwa die freie Reaktionsenthalpie und wenigstens einen aus CO/CO₂-Verhältnis, H₂/H₂O-Verhältnis und Sauerstoffpartialdruck ausgewählten Parameter beinhalten.

5. Verfahren gemäß Anspruch 3 oder 4,
**dadurch gekennzeichnet,**
**dass** die Steuerung in Abhängigkeit von einer gemessenen oder angenommenen Prozesstemperatur und einem ausgewählten Schmelzebestandteil einen Zielwert für das CO/CO₂-Verhältnis und/oder das H₂/H₂O-Verhältnis und/oder den Sauerstoffpartialdruck ermittelt, um einen Sollwert für die Zudosierung des Reagens oder Reaktivstoffs festzulegen.

6. Verfahren gemäß Anspruch 5,
**dadurch gekennzeichnet,**
**dass** der ausgewählte Schmelzebestandteil ein oxidationsempfindlichster Legierungsbestandteil einer in der Schmelze enthaltenen Legierung ist.

7. Verfahren gemäß einem der Ansprüche 3 bis 6,
**dadurch gekennzeichnet,**
**dass** die Zudosierung unter Messung des Sauerstoffpartialdrucks bzw. -gehalts während der Verdüsung reguliert wird.

8. Verfahren gemäß einem der Ansprüche 3 bis 7,
**dadurch gekennzeichnet,**
**dass** die Steuerung zur Ermittlung des Zielwerts oder der Zielwerte von einem in einem Ellingham-Richardson-Diagramm oder Ellingham-Diagramm (50) dargestellten Reaktionsverlauf Gebrauch macht, der als Rechenanweisung oder Tabelle für die Steuerung zugreifbar hinterlegt ist.

9. Vorrichtung (1) zum Herstellen von sauerstoffarmem Metallpulver, welche umfasst:
- eine Einrichtung (2) zum Bereitstellen einer Schmelze eines Metalls oder einer Metall-Legierung,
- eine Düseneinrichtung (4) zum Verdüsen der Schmelze mittels eines Verdüsungsfluids (17), und
- eine Verdüsungskammer (14) zum Ausbilden von Metallpulverpartikeln aus der verdüsten Schmelze mittels eines Verdüsungsfluids (17),
**dadurch gekennzeichnet,**
**dass** eine Reaktivstoffzuführeinrichtung (11) vorgesehen ist, die ausgebildet ist, um der verdüsten Schmelze und/oder dem Verdüsungsfluid (17) oder einem Spülgas ein Reagens oder Reaktivstoff zur Reduzierung des Sauerstoffgehalts zuzusetzen.

10. Vorrichtung (1) gemäß Anspruch 9,
**dadurch gekennzeichnet,**
**dass** das Reagens oder der Reaktivstoff einen stark reduzierenden Kohlenwasserstoff, insbesondere Acetylen, Ethen, Propan, Erdgas oder dergleichen, aufweist.

11. Vorrichtung (1) gemäß Anspruch 9 oder 10,
**dadurch gekennzeichnet,**
**dass** die Reaktivstoffzuführeinrichtung (11) eine Mischkammer zum Beimischen des Reagens oder Reaktivstoffs zum Verdüsungsfluid (17) oder Spülgas umfasst, wobei aus der Mischkammer der Düseneinrichtung (4) zumindest bereichsweise das Reagens oder der Reaktivstoff oder das Verdüsungsfluid (17) oder Spülgas oder eine Mischung aus Verdüsungsfluid (17) oder Spülgas und Reagens oder Reaktivstoff zuführbar ist.

12. Vorrichtung (1) gemäß Anspruch 11,
**dadurch gekennzeichnet,**
**dass** die Mischkammer einen ersten Einlass zum Zuführen eines Verdüsungsfluids (17) oder Spülgases und einen zweiten Einlass zum Zuführen eines Reagens oder Reaktivstoffs oder einen zweiten Einlass zum Zuführen eines das Reagens oder den Reaktivstoff enthaltenden Verdüsungsfluids (17) oder Spülgases sowie einen Auslass, der mit der Düseneinrichtung (4) verbunden ist, aufweist.

13. Vorrichtung (1) gemäß einem der Ansprüche 9 bis 12,
**dadurch gekennzeichnet,**
**dass** die Reaktivstoffzuführeinrichtung (11) zumindest eine Düse umfasst, welche ausgebildet ist, um das Reagens oder den Reaktivstoff oder ein das Reagens oder den Reaktivstoff enthaltendes Gemisch in die Verdüsungskammer (14) einzubringen.

14. Vorrichtung (1) gemäß einem der Ansprüche 9 bis 13,
**dadurch gekennzeichnet,**
**dass** die Düseneinrichtung (4) einen Einlass zum Zuführen des insbesondere gasförmigen Verdüsungsfluids (17) und/oder einen Einlass zum Zuführen des Spülgases und einen Einlass zum Zuführen des Reagens oder Reaktivstoffs oder eines das Reagens oder den Reaktivstoff enthaltenden Gases (Premix) aus entsprechenden Vorratsbehältern aufweist.

15. Vorrichtung (1) gemäß einem der Ansprüche 9 bis 14,
**dadurch gekennzeichnet,**
**dass** zur Steuerung einer Zugabe des Reagens oder Reaktivstoffs eine Steuereinrichtung vorgesehen ist, wobei die Steuereinrichtung vorzugsweise eine Reaktivstoffregeleinrichtung mit einem geschlossenen Regelkreis umfasst, die die Zugabe regelt und die insbesondere ausgebildet ist, mittels eines Sensors einen Ist-Wert eines oder mehrerer Volumenströme in der Verdüsungskammer (14) und/oder einer Verdüsungsdüse und/oder der Mischkammer und/oder einer Verdüsungsfluidkammer zu (6) erfassen, diesen mit einem vorgegebenen Sollwert eines oder mehrerer Volumenströme zu vergleichen und über ein Stellglied dann den vorgegebenen Sollwert einzustellen.

16. Vorrichtung (1) gemäß Anspruch 15,
**dadurch gekennzeichnet,**
**dass** die Reaktivstoffregeleinrichtung ausgebildet ist, um eine Zudosierung des Reagens, insbesondere eines Kohlenwasserstoffes, unter Rückgriff auf formelmäßig oder diagrammatisch darstellbare, analytisch oder simulativ oder experimentell ermittelte Zusammenhänge, die einen Oxidationsprozess der Schmelzebestandteile unter Berücksichtigung von Parametern einer Atmosphäre, in welcher die Reaktion stattfindet, beispielsweise in Form eines Ellingham-Richardson-Diagramm oder Ellingham-Diagramm (50) beschreiben, so zu steuern, dass sowohl eine Aufkohlung des Materials als auch eine Oxidbildung verhindert werden.
